# EUROPEAN PATENT APPLICATION

(11) **EP 4 015 261 A1**
(43) Date of publication of application: **22.06.2022**
(21) Application number: 21199243.3
(22) Date of filing: 27.09.2021
(51) Int. Cl.: B60F 1/02

(54) **DUAL MODE VEHICLE THAT OPERATES ON BOTH GUIDED RAILS AND UNGUIDED ROADWAYS**

(30) Priority: 17.12.2020 US 202017125259
(71) Applicant: Drake, Owen Gregory, Fortuna, CA 95540 (US)
(72) Inventor: Drake, Owen Gregory, Fortuna, CA 95540 (US)
(74) Representative: Loo, Chi Ching

(57) **Abstract**

A dual mode vehicle that operates on guided rails and roadways includes a capsule (1), a carriage (6), a front left drive system (12), a front right drive system (13), a rear left drive system (14), a rear right drive system (15), a pod control unit (27), and at least one battery (29). The carriage (6) includes a spherical frame-housing (7) and a base (10). A spherical cabin (2) of the capsule (1) is attitudinally mounted within the spherical frame-housing (7). The front left drive system (12), the front right drive system (13), the rear left drive system (14), and the rear right drive system (15) each includes a motor (16), a drive axle (19), a road wheel (20), and a rail wheel (21). The road wheel (20) and the rail wheel (21) are axially mounted to the drive axle (19). The motor (16) that is mounted to the base (10) is operatively coupled with the drive axle (19) through the at least one battery (29) and the pod control unit (27) to operate a roadway or railway transportation mode.

## Description

### FIELD OF THE INVENTION

The present invention relates generally to a transportation vehicle. More specifically, the present invention relates to a dual mode vehicle which operates on both guided rails and unguided roadways with two different drive modes.

### BACKGROUND OF THE INVENTION

Transportation system usually includes transportation infrastructure and vehicles. Modern transportation infrastructure includes roadways, railways, airways, waterway, etc. Among others, roadways and railways are the most important ways to move passengers and freight. However, they are also burdened by many disadvantages. For roadways systems, such as the highway system, safety is a significant concern due to the fact that the roadways are traveled by personally owned and driven vehicles. The speeds and directions of the vehicles are determined solely by the judgment or desire of the driver. Moreover, conventional roadways systems also suffer from the drawbacks of traffic jams and inefficient use of energy resources.

Trains usually include multiples of passenger or freight cars which are hauled by a separate locomotive. Trains are beneficial in that they travel on guided rails and thus are safe to travel on. However, railway transport cannot provide door to door service as they are tied to a particular track. The routes and timings of the trains are usually fixed and cannot be adjusted according to individual requirements. Also, railway transport is unsuitable and uneconomical for short distance and small loads due to the high operating cost.

The present invention aims to solve some of these problems by disclosing a dual mode vehicle which benefits from both the roadways transportation system and railways transportation system. More specifically, the present invention is a battery powered vehicle and utilizes a retractable wheel assembly system to drive on roadways and an integrated rail mount system to drive on railways.

### SUMMARY OF THE INVENTION

The present invention is a dual mode vehicle which can operate with two different drive modes. In a first operational mode, the vehicle functions as an electrically operated pod and travels along two elevated rails or a pair of conventional railways. In a second operational mode, the vehicle is able to act as a wheeled electric car to travel on conventional roadways. The present invention has the advantages of simple transition to and from the rails, comfort, and improved safety.

### BRIEF DESCRIPTION OF THE DRAWINGS

FIG. **1** is a top perspective view for an exemplary embodiment of the present invention.
FIG. **2** is a front view for an exemplary embodiment of the present invention.
FIG. **3** is a bottom perspective view for an exemplary embodiment of the present invention.
FIG. **4** is a bottom perspective view for an exemplary embodiment of the present invention.
FIG. **5** is a front exploded view for an exemplary embodiment of the present invention, wherein the capsule is separated from the carriage.
FIG. **6** is a basic schematic view showing the overall operation of the present invention.
FIG. **7** is a basic schematic view showing the electrical connections of the present invention.
FIG. **8** is a basic schematic view showing the electronical connections of the present invention.
FIG. **9** is a basic schematic view showing the torsional connection between the motor, the rail wheel, and the road wheel of the front left drive system of the present invention.
FIG. **10** is a basic schematic view showing the torsional connection between the motor, the rail wheel, and the road wheel of the rear left drive system of the present invention.
FIG. **11** is a basic schematic view showing the torsional connection between the motor, the rail wheel, and the road wheel of the front right drive system of the present invention.
FIG. **12** is a basic schematic view showing the torsional connection between the motor, the rail wheel, and the road wheel of the rear right drive system of the present invention.

### DETAIL DESCRIPTIONS OF THE INVENTION

All illustrations of the drawings are for the purpose of describing selected versions of the present invention and are not intended to limit the scope of the present invention.

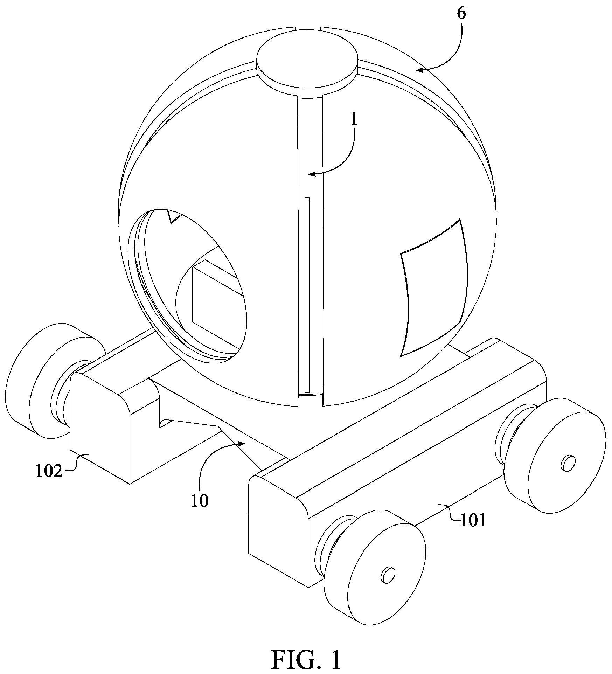

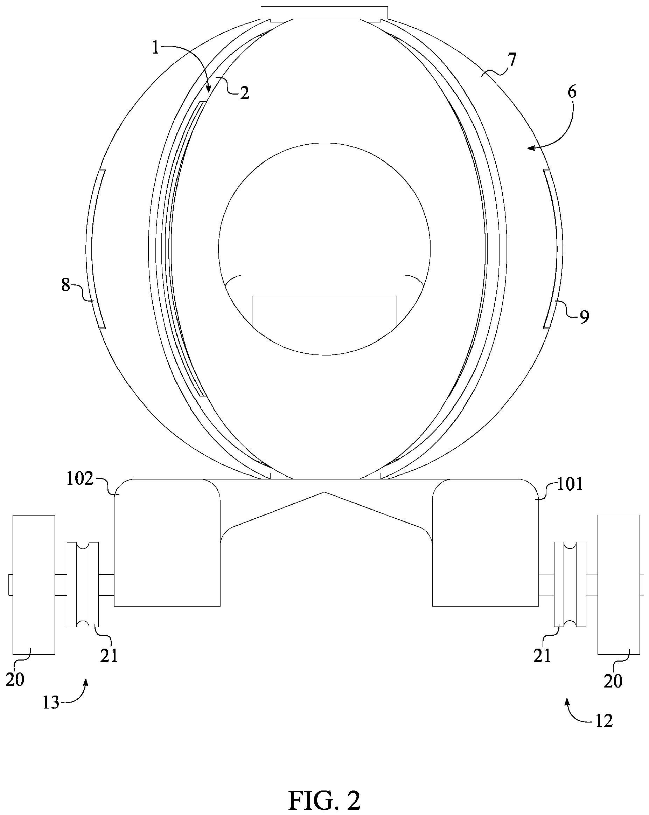

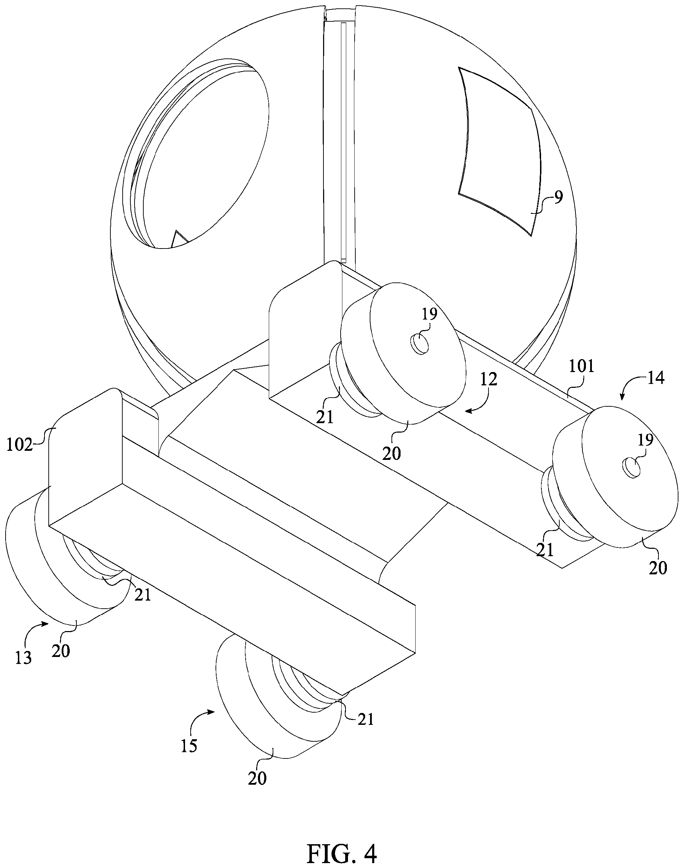

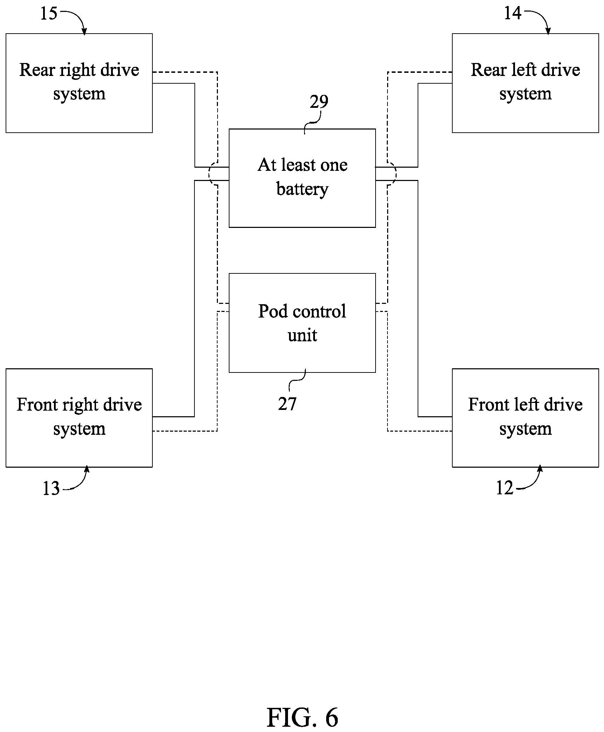

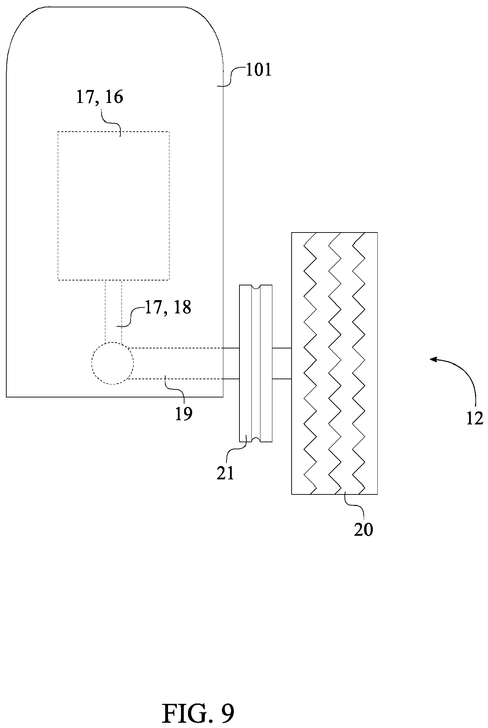

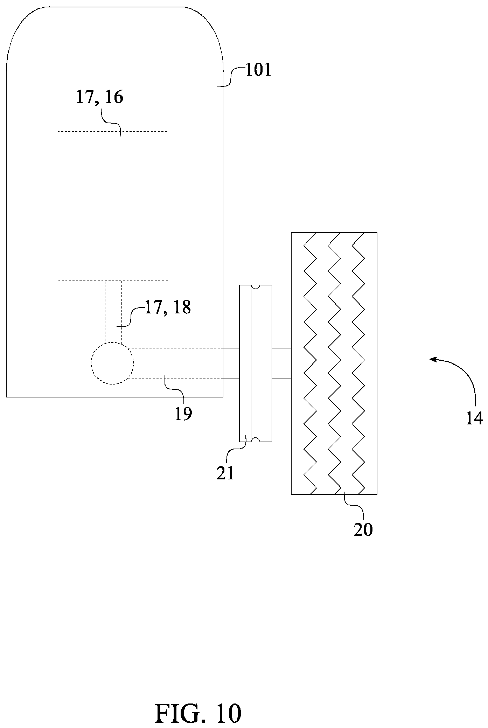

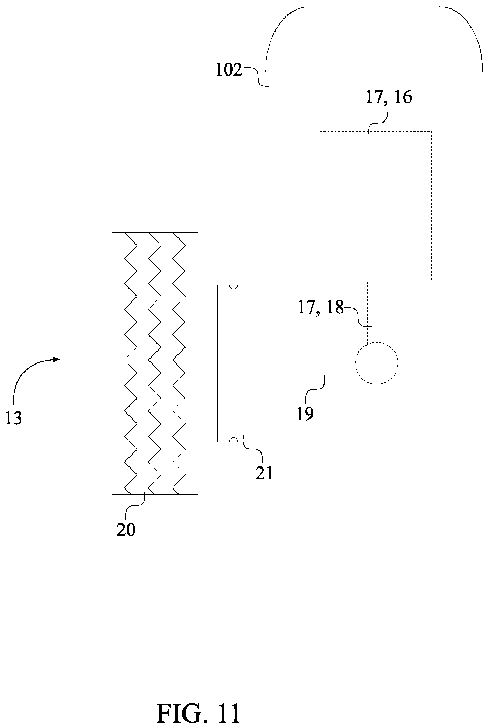

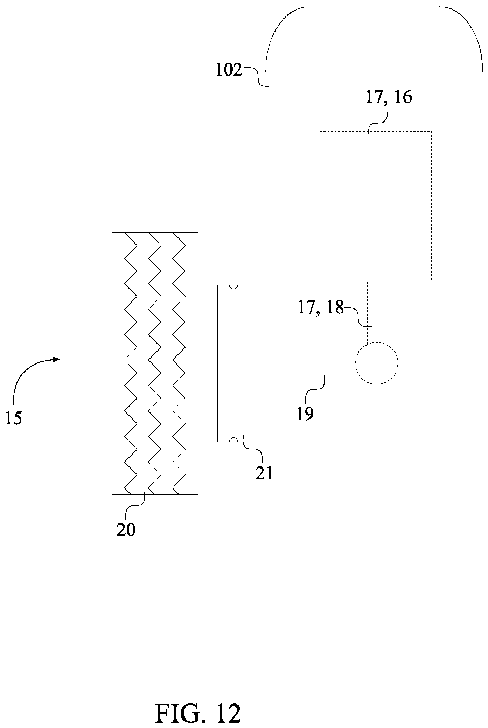

The present invention is designed to provide a vehicle which can travel on both elevated railways and conventional roadways. In a first operational mode, the present invention functions as a wheeled electric car that can travel on conventional roadways. In a second operational mode, the present invention functions as an electrically operated pod that is guided along a pair of rails. The present invention comprises a capsule **1**, a carriage **6**, a front left drive system **12**, a front right drive system **13**, a rear left drive system **14**, a rear right drive system **15**, a pod control unit **27**, and at least one battery **29** as shown in FIG. **1-6**. The carriage **6** comprises a spherical frame-housing **7** and base **10** as shown in FIG. **2**. The front left drive system **12**, the front right drive system **13**, the rear left drive system **14**, and the rear right drive system **15** each comprising a motor **16**, a drive axle **19**, a road wheel **20**, and a rail wheel **21** as shown in FIG. **9-12**.

In reference to a general configuration of the present invention, a spherical cabin **2** of the capsule **1** is attitudinally mounted within the spherical frame-housing **7** so that the spherical cabin **2** can be freely rotated within the spherical frame-housing **7**. The front left drive system **12** and the rear left drive system **14** are mounted to a left section **101** of the base **10** so that the left side of the present invention can be independently operated within the first operation mode or the second operational mode. Similarly, the front right drive system **13** and the rear right drive system **15** are mounted to a right section **102** of the base **10** so that the right side of the present invention can be independently operated within the first operation mode or the second operational mode. More specifically, the road wheel **20** and the rail wheel **21** are axially mounted to the drive axle **19** as the motor **16** is operatively coupled with the drive axle **19** through the at least one battery **29** and the pod control unit **27**. In other words, the motor **16** for the front left drive system **12**, the front right drive system **13**, the rear left drive system **14**, and the rear right drive system **15** is able to independently power the present invention thus stabilizing the movement of the spherical frame-housing 7 along the pair of rails or the conventional roadways.

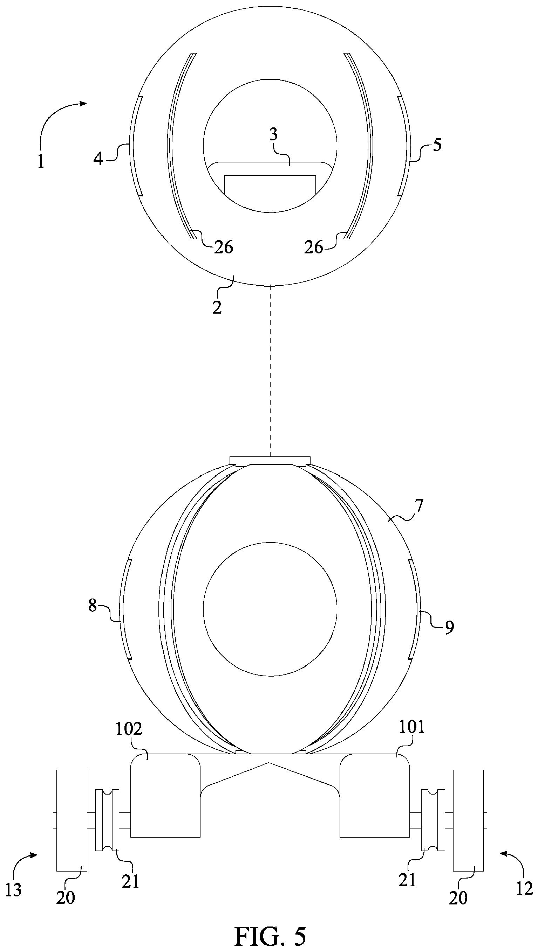

The capsule **1** is a structural member that is positioned within the carriage **6** so that the users of the present invention can be accommodated. In reference to FIG. **5**, the capsule **1** further comprising at least one seat **3**, a first door **4**, and a second door **5** in addition to the spherical cabin **2.** The spherical cabin **2** is a rigid body and functions similar to cabin of a vehicle. The at least one seat **3** is mounted within the spherical cabin **2** thus providing seating arrangements for the users of present invention. The at least one seat **3** can be a bench seat or a bucket seat, wherein the type and the exact placement of seat and is determined upon the specific usage of the present invention. The at least one seat **3** is preferably equipped with industry standard safety and comfort accessories such as seat belts, headrests, seat heaters, seat air-conditioning, multi-positioning power seat features, and any other types of seat related features. Optionally, the capsule **1** can eliminate the at least one seat **3** to accommodate wheelchairs or freights. The first door **4** and the second door **5** are hermetically integrated into the spherical cabin **2** and diametrically opposed of each other about the spherical cabin **2.** The first door **4** and the second door **5** function as multiple access points for the inside of the spherical cabin **2.** Resultantly, the users can get in and out of the spherical cabin **2** through the first door **4** and the second door **5** when the present invention is stationary. Furthermore, the first door **4** and the second door **5** can be manually or automatically operated within the present invention according the vehicular industry regulations.

The carriage **6** that structurally secures the capsule **1** further comprises a third door **8** and a fourth door **9** as shown in FIG. **5****.** The spherical cabin **2** is enclosed by the spherical frame-housing **7** so that the spherical cabin **2** can be rotated within the spherical frame-housing **7.** The third door **8** and the fourth door **9** are hermetically integrated into the spherical frame-housing **7** and diametrically opposed of each other about the spherical frame-housing **7.** More specifically, the third door **8** is designed to be aligned with the first door **4** so that the users of the present invention can move in and out into the spherical cabin **2** through the spherical frame-housing **7.** The alignment between the first door **4** and the third door **8** is only functional when the present invention is at a stationary position thus eliminating accidental opening of the first door **4** during an operational position of the present invention. The fourth door **9** is designed to be aligned with the second door **5** so that the users of the present invention can move in and out into the spherical cabin **2** through the spherical frame-housing **7.** The alignment between the second door **5** and the fourth door **9** is only functional when the present invention is at a stationary position thus eliminating accidental opening of the second door **5** during an operational position of the present invention. Preferably, the spherical frame-housing **7** is made of hollow tubular bodies, such that electrical conduits, pneumatic lines, and other necessary components can travel therein.

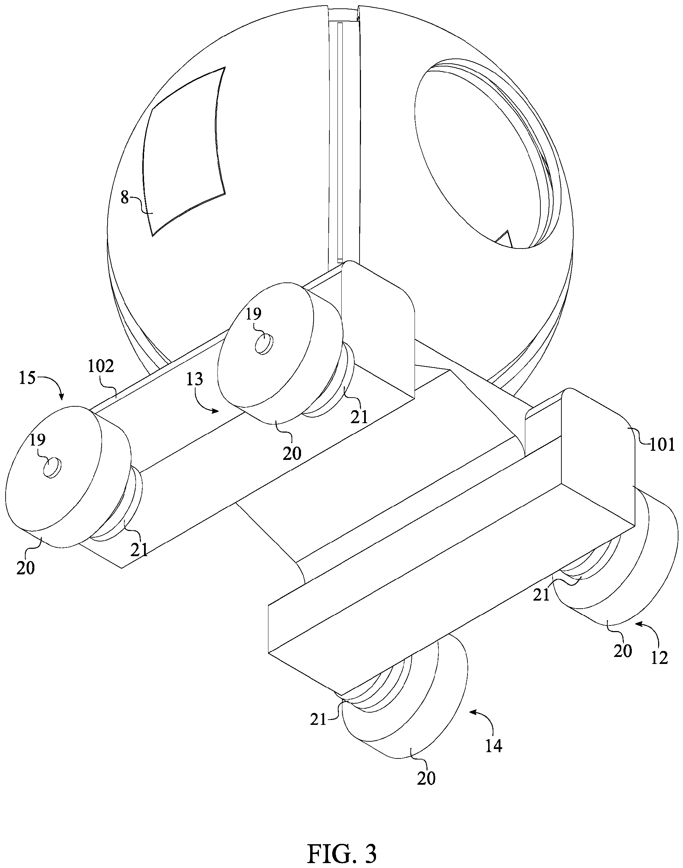

In reference to FIG. **3-4**, the left section **101** is configured to mount the front left drive system **12** and the rear left drive system **14** to the present invention and functions as a structural chassis. Similarly, right section **102** is configured to mount the front right drive system **13** and the rear right drive system **15** to the present invention and functions as a structural chassis. The left section **101** and the right section **102** are externally connected to the spherical frame-housing **7** and diametrically opposed of each other about the spherical frame-housing **7.** The left section **101** and the right section **102** are preferably formed into an elongated rectangular shape so that the front left drive system **12**, the front right drive system **13**, the rear left drive system **14**, and the rear right drive system **15** can be operatively mounted to the present invention.

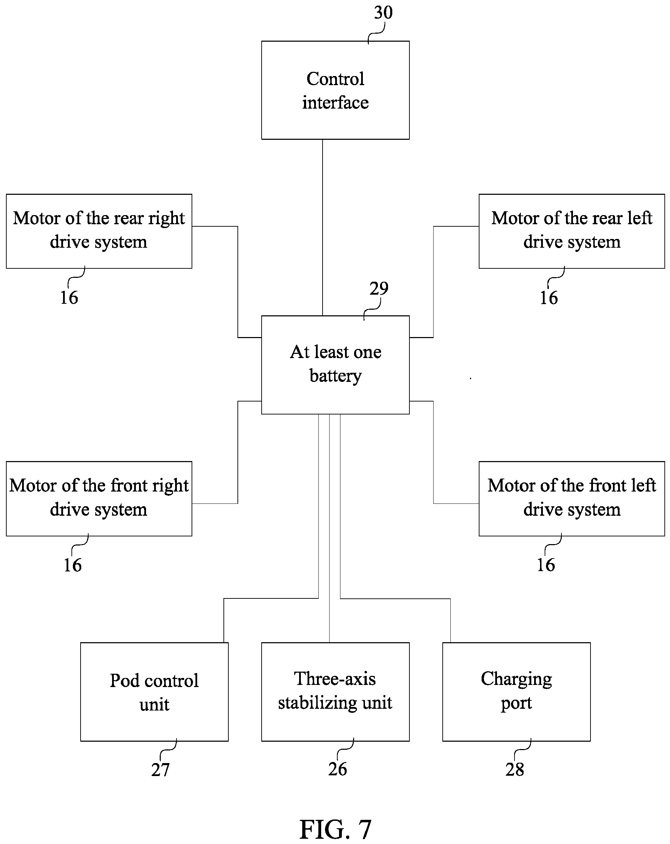

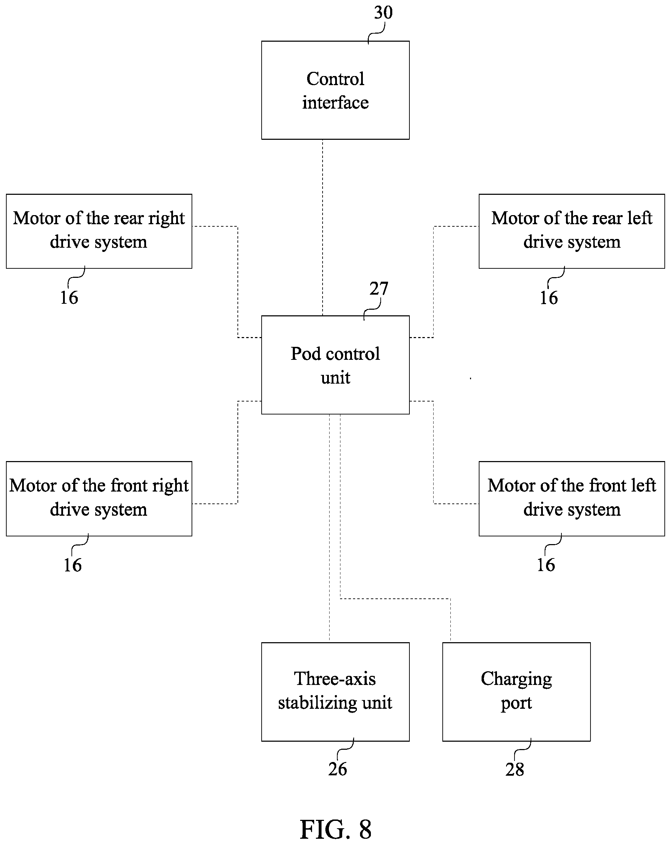

In reference to FIG. **7-8**, the present invention further comprises a control interface **30** that functions as a graphical user interface. The control interface **30** is utilized within the present invention so that the user of the present invention can input all of the operational commands. The control interface **30** is mounted within the spherical cabin **2** and positioned adjacent to the at least one seat **3**, allowing easy access for the users. The control interface **30** is electrically connected to the at least one battery **29** and electronically connected to the pod control unit **27** to fully execute the operational commands of the present invention. More specifically, once the operational commands are inputted through the control interface **30**, the operational commands are electronically sent and executed through the pod control unit **27.** For example, when the operation of the road wheel **20** is selected through the control interface **30**, the pod control unit **27** activates the road wheel **20** and deactivates operational statues of the rail wheel **21** so that the present invention can be operational within conventional roads. When the operation of the rail wheel **21** is selected through the control interface **30**, the pod control unit **27** activates the rail wheel **21** and deactivates operational statues of the road wheel **20** so that the present invention can be operational within conventional railways or any other pair of rails.

The pod control unit **27** functions similar to electronic control unit of vehicle. As a result, the pod control unit **27** is able to control and implement vehicular electrical systems of the present invention. The at least one battery **29** is electrically connected to the pod control unit **27**, as shown in FIG. **7-8**, so that the pod control unit **27** can be powered within the present invention.

The present invention further comprises a charging port **28** as shown in FIG. **7-8****.** The charging port **28** is electrically connected to the at least one battery **29** so that the at least one battery **29** can be charged with an external electrical charger or charging station. The charging port **28** is electronically connected to the pod control unit **27** so that overcharging of the at least one battery **29** can be eliminated. For example, when the at least one battery **29** is fully charged through an external electrical charger or charging station, the pod control unit **27** detects that the battery **29** is fully charged and stops the charging process to eliminate overcharging of the at least one battery **29.**

The present invention further comprises a three-axis stabilizing unit **26** that functions as an attitude control in which the capsule **1** is held fixed in the desired orientation without any rotation while the carriage **6** spins and rotates around the capsule **1.** Preferably, propulsion system thrusters are utilized within the present invention as the three-axis stabilizing unit **26** to maintain a fixed position for the capsule **1.** In reference to FIG. **5** and FIG. **7****-8**, the three-axis stabilizing unit **26** is mounted onto the spherical cabin **2.** The three-axis stabilizing unit **26** is electrically connected to the at least one battery **29** and electronically connected to the pod control unit **27**. As a result, when the present invention is operational, the pod control unit **27** is able to continuously identify the orientation of the capsule **1** with respect to the orientation of the carriage **6** so that the continuous operation of the three-axis stabilizing unit **26** can maintain a fixed position for the capsule **1.** For example, the capsule **1** is held fixed in the desired orientation without any rotation while the carriage **6** spins and rotates around the capsule **1** to accommodate the configuration of the pair of rails when the present invention is in the second operational mode.

The motor **16** of the front left drive system **12**, the front right drive system **13**, the rear left drive system **14**, and the rear right drive system **15** functions as the primary drivetrain of the present invention during the first operational mode and the second operational mode. In reference to FIG. **7-8**, The motor **16** of the front left drive system **12**, the front right drive system **13**, the rear left drive system **14**, and the rear right drive system **15** is electrically connected to the at least one battery **29** thus converting the electrical energy to rotational kinetic energy. Furthermore, the motor **16** of the front left drive system **12**, the front right drive system **13,** the rear left drive system **14**, and the rear right drive system **15** is electronically connected to the pod control unit **27**, wherein the pod control unit **27** selectively operates the front left drive system **12**, the front right drive system **13**, the rear left drive system **14**, and the rear right drive system **15** according user's inputs and the three-axis stabilizing unit **26.** For example, rotational direction of the motor **16** is controlled through the pod control unit **27** as the at least one battery **29** continuously powers the motor **16** of the front left drive system **12,** the front right drive system **13**, the rear left drive system **14,** and the rear right drive system **15.**

In reference to FIG. **9-12**, the drive axle **19** for the front left drive system **12** and the rear left drive system **14** are rotatably mounted to the left section **101.** The drive axle **19** for the front right drive system **13** and the rear right drive system **15** are rotatably mounted to the right section **102.** The drive axle **19.** The motor **16** and the road wheel **20** are oppositely positioned of each other about the drive axle **19** as the road wheel **20** is functions as the outmost wheel within the present invention. The road wheel **20** is concentrically mounted around the drive axle **19** so that the rotational energy of the drive shaft can be transferred to the road wheel **20.** The motor **16** is operatively coupled with the drive axle **19**, wherein the motor **16** rotates the drive axle **19** as the electrical energy is converted into rotational kinetic energy. The rail wheel **21** is concentrically mounted around the drive axle **19** and positioned in between the motor **16** and the road wheel **20**, wherein the rail wheel **21** functions as the intermediate wheel within the present invention. The overall diameter of the rail wheel **21** is smaller than the overall diameter of the road wheel **20** so that the first operational mode and the second operational mode can work independent of each other. For example, when the present invention at the first operational mode, the road wheel **20** is able to rotationally engage atop the conventional roadways as the rail wheel **21** does not touch the conventional roadways. When the present invention at the second operational mode, the rail wheel **21** is able to rotationally engage atop the conventional railways or hang from an elevated pair of rails as the road wheel **20** is freely positioned outside of the conventional railways or the elevated pair of rails. Furthermore, the motor 16 for the front left drive system 12 and the rear left drive system 14 are internally mounted to the left section **101** to protect from outside element that can be hazardous. Similarly, the motor 16 for the front right drive system 13 and the rear right drive system 15 are internally mounted to the right section **102** to protect from outside element that can be hazardous. The road wheel 20 and the rail wheel 21 for the front left drive system 12 and the rear left drive system 14 are externally positioned to the left section **101.** The road wheel 20 and the rail wheel 21 for the front right drive system 13 and the rear right drive system 15 are externally positioned to the right section **102.** due to the external positioning of the rail wheel 21 and the road wheel 20, the present invention can easily transition from the first operational mode to the second operational mode and vise vera.

The motor **16** comprises a stator **17** and a rotor **18** as shown in FIG. **9-12****.** More specifically, the stator **17** of the front left drive system **12** and the rear left drive system **14** are mounted to the left section **101** in order to secure the front left drive system **12** and the rear left drive system **14** to the present invention and to allow the rotor **18** of the front left drive system **12** and the rear left drive system **14** to convert the electrical energy to rotational kinetic energy. Resultantly, the rotor **18** of the front left drive system **12** is torsionally connected to the drive axle **19** of the front left drive system **12.** The rotor **18** of the rear left drive system **14** is torsionally connected to the drive axle **19** of the rear left drive system **14.** Then, the rotational energy of the drive shaft with respect to the left section **101** can be selectively transferred to the road wheel **20** or the rail wheel **21.** The stator **17** of the front right drive system **13** and the rear right drive system **15** are mounted to the right section **102** in order to secure the front right drive system **13** and the rear right drive system **15** to the present invention and to allow the rotor **18** of the front right drive system **13** and the rear right drive system **15** to convert the electrical energy to rotational kinetic energy. Resultantly, the rotor **18** of the front right drive system **13** is torsionally connected to the drive axle **19** of the front right drive system **13.** The rotor **18** of the rear right drive system **15** is torsionally connected to the drive axle **19** of the rear right drive system **15.** Then, the rotational energy of the drive shaft with respect to the right section **102** can be selectively transferred to the road wheel **20** or the rail wheel **21.** The preset invention can utilize any types of industry standard torsional connections to respectively transfer the rotational kinetic energy of the motor **16** to the road wheel **20** or the rail wheel **21** via the drive axle **19.** For example, a direct-drive system, a gear driven system, a chain driven system, a belt driven system, or any other types of related torsional systems.

In reference to the first operational mode, the motor **16** of the front left drive system **12**, the front right drive system **13**, the rear left drive system **14**, and the rear right drive system **15** are powered by the at least one battery **29.** Resultantly, the road wheel **20** of the front left drive system **12**, the front right drive system **13**, the rear left drive system **14**, and the rear right drive system **15** are able to drive the present invention on the conventional roadways as an electric vehicle. All of the vehicular electrical systems are controlled/inputted through the control interface **30** while the pod control unit **27** executes the vehicular electrical systems. Preferably, the present is an autonomous electric vehicle when running on the conventional roadways and may further comprise a variety of related components to enable autonomous driving capabilities. For example, the present invention may comprise radar, cameras, Lidar, sonar, GPS, and other necessary sensors and modules.

In reference to the first operational mode, the motor **16** of the front left drive system **12**, the front right drive system **13,** the rear left drive system **14**, and the rear right drive system **15** are powered by the at least one battery **29.** Resultantly, the road wheel **20** of the front left drive system **12,** the front right drive system **13**, the rear left drive system **14**, and the rear right drive system **15** are able to hang and drive the present invention on the pair of elevated tracks as an electric vehicle. All of the vehicular electrical systems are controlled/inputted through the control interface **30** while the pod control unit **27** executes the vehicular electrical systems. Preferably, the present is an autonomous electric vehicle when running on the conventional roadways and may further comprise a variety of related components to enable autonomous driving capabilities. For example, the present invention may comprise radar, cameras, Lidar, sonar, GPS, and other necessary sensors and modules.

In reference to the second operational mode, the motor **16** of the front left drive system **12**, the front right drive system **13**, the rear left drive system **14**, and the rear right drive system **15** are powered by an external electrical conduit as the primary power source and the at least one battery **29** as the secondary power source. Resultantly, the rail wheel **21** of the front left drive system **12**, the front right drive system **13**, the rear left drive system **14**, and the rear right drive system **15** are able to drive the present invention on the conventional railways as an electric pod. All of the vehicular electrical systems are controlled/inputted through the control interface **30** while the pod control unit **27** executes the vehicular electrical systems. Preferably, the present is an autonomous electric vehicle when running on the conventional railways and may further comprise a variety of related components to enable autonomous driving capabilities. For example, the present invention may comprise radar, cameras, Lidar, sonar, GPS, and other necessary sensors and modules.

In reference to the second operational mode, the motor **16** of the front left drive system **12**, the front right drive system **13**, the rear left drive system **14**, and the rear right drive system **15** are powered by an external electrical conduit as the primary power source and the at least one battery **29** as the secondary power source. Resultantly, the rail wheel **21** of the front left drive system **12**, the front right drive system **13**, the rear left drive system **14**, and the rear right drive system **15** are able to hang and drive the present invention on an elevated pair of rails as an electric pod. All of the vehicular electrical systems are controlled/inputted through the control interface **30** while the pod control unit **27** executes the vehicular electrical systems. Preferably, the present is an autonomous electric vehicle when running on the conventional railways and may further comprise a variety of related components to enable autonomous driving capabilities. For example, the present invention may comprise radar, cameras, Lidar, sonar, GPS, and other necessary sensors and modules.

Furthermore, the present invention equipped with a plurality of vehicular accessory and safety system such as air conditioning/heating systems, entertaining systems, illuminating systems, a regenerative braking system, traction control systems, an exhaust system, a steering system, a suspension system, and any other types of vehicular related systems that are required and known within the vehicular industry.

Although the invention has been explained in relation to its preferred embodiment, it is to be understood that many other possible modifications and variations can be made without departing from the spirit and scope of the invention as hereinafter claimed.

## Claims

1. A dual mode vehicle that operates on both guided rails and unguided roadways comprising:
a capsule;
a carriage;
a front left drive system;
a front right drive system;
a rear left drive system;
a rear right drive system;
a pod control unit;
at least one battery;
the carriage comprising a spherical frame-housing and a base;
the front left drive system, the front right drive system, the rear left drive system, and the rear right drive system each comprising a motor, a drive axle, a road wheel, and a rail wheel;
a spherical cabin of the capsule being attitudinally mounted within the spherical frame-housing;
the front left drive system and the rear left drive system being mounted to a left section of the base;
the front right drive system and the rear right drive system being mounted to a right section of the base;
the road wheel and the rail wheel being axially mounted to the drive axle; and
the motor being operatively coupled with the drive axle through the at least one battery and the pod control unit.

2. The dual mode vehicle that operates on both guided rails and unguided roadways as claimed in claim 1 comprising:
the capsule further comprising at least one seat, a first door, and a second door;
the at least one seat being mounted within the spherical cabin;
the first door and the second door being hermetically integrated into the spherical cabin; and
the first door and the second door being diametrically opposed of each other about the spherical cabin.

3. The dual mode vehicle that operates on both guided rails and unguided roadways as claimed in claim 1 comprising:
the carriage further comprising a third door and a fourth door;
the spherical cabin being enclosed by the spherical frame-housing;
the third door and the fourth door being hermetically integrated into the spherical frame-housing; and
the third door and the fourth door being diametrically opposed of each other about the spherical frame-housing.

4. The dual mode vehicle that operates on both guided rails and unguided roadways as claimed in claim 1 comprising:
the left section and the right section being externally connected to the spherical frame-housing; and
the left section and the right section being diametrically opposed of each other about the spherical frame-housing.

5. The dual mode vehicle that operates on both guided rails and unguided roadways as claimed in claim 1 comprising:
the motor of the front left drive system, the front right drive system, the rear left drive system, and the rear right drive system being electrically connected to the at least one battery; and
the motor of the front left drive system, the front right drive system, the rear left drive system, and the rear right drive system being electronically connected to the pod control unit.

6. The dual mode vehicle that operates on both guided rails and unguided roadways as claimed in claim 1 comprising:
the drive axle for the front left drive system and the rear left drive system being rotatably mounted to the left section;
the drive axle for the front right drive system and the rear right drive system being rotatably mounted to the right section;
the motor and the road wheel being oppositely positioned of each other about the drive axle;
the road wheel being concentrically mounted around the drive axle;
the motor being operatively coupled with the drive axle, wherein the motor rotates the drive axle;
the rail wheel being concentrically mounted around the drive axle;
the rail wheel being positioned in between the motor and the road wheel;
the motor for the front left drive system and the rear left drive system being internally mounted to the left section;
the road wheel and the rail wheel for the front left drive system and the rear left drive system being externally positioned to the left section;
the motor for the front right drive system and the rear right drive system being internally mounted to the right section; and
the road wheel and the rail wheel for the front right drive system and the rear right drive system being externally positioned to the right section.

7. The dual mode vehicle that operates on both guided rails and unguided roadways as claimed in claim 6 comprising:
the motor comprising a stator and a rotor;
a stator of the front left drive system and the rear left drive system being mounted to the left section;
a stator of the front right drive system and the rear right drive system being mounted to the right section;
a rotor of the front left drive system being torsionally connected to the drive axle of the front left drive system;
a rotor of the rear left drive system being torsionally connected to the drive axle of the rear left drive system;
a rotor of the front right drive system being torsionally connected to the drive axle of the front right drive system; and
a rotor of the rear right drive system being torsionally connected to the drive axle of the rear right drive system.

8. The dual mode vehicle that operates on both guided rails and unguided roadways as claimed in claim 1, wherein the motor of the front left drive system, the front right drive system, the rear left drive system, and the rear right drive system is electrically powered from an external electrical conduit.

9. The dual mode vehicle that operates on both guided rails and unguided roadways as claimed in claim 1 comprising:
a three-axis stabilizing unit;
the three-axis stabilizing unit being mounted onto the spherical cabin;
the three-axis stabilizing unit being electrically connected to the at least one battery; and
the three-axis stabilizing unit being electronically connected to the pod control unit.

10. The dual mode vehicle that operates on both guided rails and unguided roadways as claimed in claim 1 comprising:
a control interface;
the control interface being mounted within the spherical cabin;
the control interface being electrically connected to the at least one battery; and
the control interface being electronically connected to the pod control unit.

11. The dual mode vehicle that operates on both guided rails and unguided roadways as claimed in claim 1 comprising:
a charging port;
the charging port being electrically connected to the at least one battery; and
the charging port being electronically connected to the pod control unit.

12. The dual mode vehicle that operates on both guided rails and unguided roadways as claimed in claim 1, wherein the at least one battery is electrically connected to the pod control unit.
